# EUROPEAN PATENT APPLICATION

(11) **EP 4 644 340 A1**
(43) Date of publication of application: **05.11.2025**
(21) Application number: 24305693.4
(22) Date of filing: 02.05.2024
(51) Int. Cl.: C03B 5/182, C03B 5/225, C03B 5/20

(54) **FURNACE FOR THE PRODUCTION OF A REFINED MOLTEN GLASS COMPRISING A SECOND TANK WITH A SEPARATION WALL**

(71) Applicant: VERALLIA PACKAGING, 92400 Courbevoie (FR)
(72) Inventor: BULTYNCK, Hervé, 71100 Chalon sur Saône (FR); LUCE, Benjamin, 71350 Ciel (FR); LAHBIB, Dorian, 71390 Sassangy (FR); HAYAU, Frédéric, 92150 Suresnes (FR)
(74) Representative: Germain Maureau

(57) **Abstract**

The present invention relates to a hybrid furnace (1) for the production of a refined molten glass (8) from at least one solid starting material (9), the furnace (1) comprising a first tank (2), which is a melting tank, and a second tank (3), which is a refining tank, wherein said second tank is provided with a separation wall running substantially transverse to a direction of flow of the refined molten glass in said second tank, said separation wall being configured for forcing particles of the solid material that are present in the refined molten glass to flow close a surface of said refined molten glass.

## Description

The present invention relates to a furnace for the production of refined molten glass, where the furnace comprises two separated tanks, a melting tank and a refining tank, the refining tank comprising a weir wall running substantially transverse to the direction of flow of the refined molten glass in the refining tank. The invention also relates to a method for producing glass using such a furnace.

The production of molten glass for further manufacture of glass products, such as printed glass, textured glass, reinforced glass, hollow glass, intended to be used in the fields of food packaging such as bottles and jars, tableware, cosmetic packaging, pharmaceutical packaging, perfumery packaging, etc... is performed in a continuous manner in furnaces which usually comprise a melting section and a refining section. A usually solid material is fed at an inlet opening of the melting section in order to obtain a molten glass. The solid material may comprise all materials capable of producing glass when heated. For example, the solid material may comprise raw materials such as quartz sand, soda, lime, dolomite, broken glass parts. In the melting section of the furnace, the starting material is heated up to a temperature around 1400-1450°C in order to be transformed into a state of molten glass. During this melting process, a large number of bubbles are generated. The presence of bubbles in the final molten glass is not desirable as such bubbles may cause quality problems in the final glass products manufactured from such molten glass. It is therefore necessary to remove as many bubbles as possible from the molten glass. This is the function of the refining section of the furnace. In the refining section, the molten glass is heated further in order to force the bubbles which are still present in the depth of the molten glass to move back to the surface of said molten glass and to be released in the air above said surface. Usually, in order to contribute helping the bubbles to rise to the surface of the molten glass, the floor of the melting section is provided with a bottom step forming a threshold between the melting section and the refining section.

At the end of the refining section, the molten glass shows a high temperature and a very low viscosity. Such a low viscosity is not adequate for the processing of the molten glass into the forming machines. In conventional furnaces, a channel, also called a throat, is present at an outlet opening of the refining section, said channel linking the refining section of the furnace to forehearths. The temperature of the throat is less than the temperature of the melting section and/or of the refining section The role of the forehearths is to condition the molten glass before it flows into the forming machines. The molten glass is therefore cooled down during its flowing in the forehearths, so that it reaches the adequate viscosity and temperature at the time it flows into the forming machines. The cooling down capacity of the forehearths may depend on the dimensions of the forehearths, in particular on their length.

The melting step and refining step described above are very energy consuming. Up to recently, most of the energy needed to heat up the starting material and to refine the molten glass in glass furnaces was produced by combustion of fuel in a combustion chamber located above the surface of the molten glass. The fuel may be any combustible capable of forming a flame during combustion. For example, the fuel may be a fossil fuel or hydrogen or a bio-based fuel, for example green hydrogen.

In a view of reducing the greenhouse gases and the production of carbon dioxide gases, a fraction of electrical energy has been introduced into the total energy needed to operate a glass furnace. Furnaces in which the energy needed to melt and refine the glass is provided both by combustion of a fuel and by electrical energy, and where the fraction of electrical energy provided is about 25% or more, are called hybrid furnaces.

Anyway, in the near future, in order to reach the CO₂ reduction target fixed for the climate protection, it will be necessary to significantly increase the fraction of electrical energy in hybrid furnaces. Ideally, this fraction should be increased up to 60%, preferably up to 80% or even more, of the total energy provided.

In actual hybrid furnaces, the electrical energy is provided via the use of electrodes which are usually located on the floor of the melting section of the furnace. The increase of the temperature of the molten glass via the electrodes, also called electrical heating, has some consequences on the melting and refining processes. Indeed, the electrical heating greatly modifies the flow in the furnace, due to convection effects generated by the electrical currents. Campaign tests on hybrid furnaces in which electrical heating represents about 25% of the total energy provided have shown that the molten glass quality decreases as the part of electrical heating increases. The high convection effects due to the electrical heating contributes to decreasing the residence time of the molten glass in the melting section and in the refining section, thereby preventing an optimal refining process.

Some alternatives have been proposed in order to counteract this quality decrease. Some of these alternatives act on the repartition of the fuel energy and/or on the electrical power repartition between groups of electrodes. The common alternative is to increase the molten glass temperature at throat entrance and thus in the entire furnace. This would have a good effect on the quality of the final molten glass. Nevertheless, it has the disadvantage to generate a higher energy consumption, a higher corrosion of the refractories from which the furnace is built, and consequently a lower life duration of the furnace. It has the further disadvantage to produce a final refined molten glass having such a high temperature that it requires using forehearths having a higher length in order to increase their cooling capacity. This additional cooling down step necessitates to greatly modify the existing glass conditioning installations, thereby generating high costs and heavy redesign of such installations.

There is therefore a need for a hybrid glass furnace for which the fraction of electrical energy would be significant with regard to the total energy supplied, for example at least 60% of the total energy supplied, preferably at least 80% of the total energy supplied, in which the quality of the molten glass produced would be maintained, and that would not necessitate to modify the existing installation post production.

The present invention aims at meeting these needs.

A first object of the invention is a hybrid furnace for the production of a refined molten glass from at least one starting material, said furnace comprising :
- A first tank, which is a melting tank, configured to produce a molten glass from said at least one solid material, said first tank comprising a first inlet opening for the supply of said at least one starting material and a first outlet opening for an outflow of said molten glass,
- A second tank, which is a refining tank, separated from said first tank, said second tank being configured to refine the molten glass coming from the first tank, said second tank comprising a second inlet opening for the supply of said molten glass and a second outlet opening for an outflow of the refined molten glass,
- A first throat linking said first outlet opening to said second inlet opening, configured for conveying the molten glass from said first outlet opening to said second inlet opening,
   said furnace being characterized in that
- said second tank is provided with a separation wall running substantially transverse to a direction of flow of the refined molten glass in said second tank, said separation wall being configured for forcing particles of the solid material potentially present in the refined molten glass to flow close to a surface of said refined molten glass.

The furnace of the invention allows obtaining a refined molten glass having an optimal quality, without having to increase the temperature in the melting tank to a point that would necessitate an additional cooling step at the second outlet of the refining tank. In particular, the presence of the separation wall in the second tank of the furnace of the invention forces the particles of the solid material that may still be present in the second tank to flow close to the surface of the refined molten glass, where they are urged to contact very high temperatures produced for example by burners located above the surface of the refined molten glass. The minimum temperature of these particles is therefore globally increased, this temperature increase contributing to ease the melting of these particles. In addition, the presence of the separation wall in the second tank contributes to increasing the residence time of the refined molten glass in this second tank. Such a residence time increase allows a major part of the bubbles produced in the first tank and still present in the refined molten glass in the second tank to rise to the surface and to be released. The quality of the refined molten glass in the second tank is therefore increased.

In embodiments, the separation wall is a bench. Such a bench may be located on the floor of the second tank and cooled in order to minimize corrosion of the refractories forming the second tank potentially caused by the presence of convection currents with high velocities and high temperatures. Using a bench that is cooled therefore allows optimizing the lifetime of the second tank.

In alternative embodiments, the separation wall is a weir wall. A weir wall is usually higher than a bench and it is not necessary cooled. Using a weir wall therefore allows limiting thermal losses. The weir wall also allows lowering temperature stratification within the depth of the refined molten glass.

In embodiments, wherein said second tank showing a length L2 measured along the direction of flow of the refined molten glass in said second tank and extending from said second inlet opening to said second outlet opening, and a length L3 measured along the direction of flow of the refined molten glass in said second tank and extending from said second inlet opening to said separation wall, then the separation wall in said second tank is positioned so that 0.4xL2 < L3 < 0.9xL2. Such a position of the separation wall allows increasing the residence time of the particles in an optimal way, thereby resulting in an improvement of the refining and of the quality of the refined molten glass.

In embodiments, the total energy needed to operate the furnace being supplied under the form of a combination of combustion of fuel and of electric energy, electric energy represents at least 60%, preferably at least 80% of the total energy supplied. Thanks to the structure of the furnace of the invention, and in particular thanks to the presence of the specific second tank of the furnace of the invention, it is possible to increase the part of electric energy in the total energy supplied up to significant percentages, without observing the drawbacks of existing hybrid furnaces having a high ratio of electric energy. In particular, thanks to the presence of the separation wall in the second tank allowing an increase of the minimum temperature of the particles and/or an increase of the residence time of the molten glass during the refining process in the furnace of the invention, it is possible to obtain a refined molten glass at the outlet of the second tank that shows a temperature compatible with further processing of the refined molten glass in forehearths. No additional cooling step of the refined molten glass is needed. As a consequence, no modification of existing post molten glass production installations is needed.

In embodiments, the energy supplied to the first tank is under the form of a combination of combustion of fuel and of electric energy. For example, the first tank comprises a combustion chamber comprising one or more burners located above the surface of the molten glass, and one or more electrodes located on a floor of the tank and providing electric energy within the molten glass.

In embodiments, the temperature of the molten glass in the first throat ranges from about 1270°C to about 1390°C, more preferably from about 1300°C to about 1360°C, and most preferably is about 1310°C.

In embodiments, the energy supplied to the second tank is under the form of combustion of fuel only. Alternatively, the energy supplied to the second tank may be under the form of a combination of combustion of fuel and of electric energy. Preferably, the energy supplied to the second tank should allow increasing the residence time of the refined molten glass during the refining process, while maintaining a controlled temperature during the refining process. In embodiments, the furnace further comprises a second throat located at the second outlet opening. The second throat links the second outlet opening of the second tank to the forehearths, so that the refined molten glass exiting from the second tank may be adequately conditioned to flow into the forming machines.

In embodiments, the temperature of the refined molten glass in the second throat ranges from about 1300°C to about 1380°C, more preferably from about 1310°C to about 1340°C, and most preferably is about 1320°C. Such a temperature allows further processing the refined molten glass in forehearths of existing post production installations, without having to first proceed to a cooling step of the refined molten glass.

The invention further relates to method for producing a refined molten glass using a furnace as described above.

The advantages of the invention will appear more clearly with the below detailed description and the appended figures in which:
- Figure 1 is a cross section view of an embodiment of a furnace of the invention,
- Figure 2 is a cross section view taken along plane A-A of the furnace of Figure 1,
- Figure 3 is a cross section view taken along plane B-B of the furnace of Figure 1,
- Figure 4 is a cross section view taken along plane C-C of the furnace of Figure 1,
- Figure 5 is a cross section view taken along plane D-D of the furnace of Figure 1,
- Figure 6 is a second embodiment of the first throat, second tank and second throat of the furnace of Figure 1,
- Figure 7 is a third embodiment of the first throat, second tank and second throat of the furnace of Figure 1,
- Figure 8 is a fourth embodiment of the first throat, second tank and second throat of the furnace of Figure 1
- Figure 9 shows the graphs of the heatmaps of the melting index for Furnace 1 and Furnace 2 of Example 1,
- Figure 10 shows the graphs of the heatmaps of the melting index for Furnace 3 and Furnace 4 of Example 2.

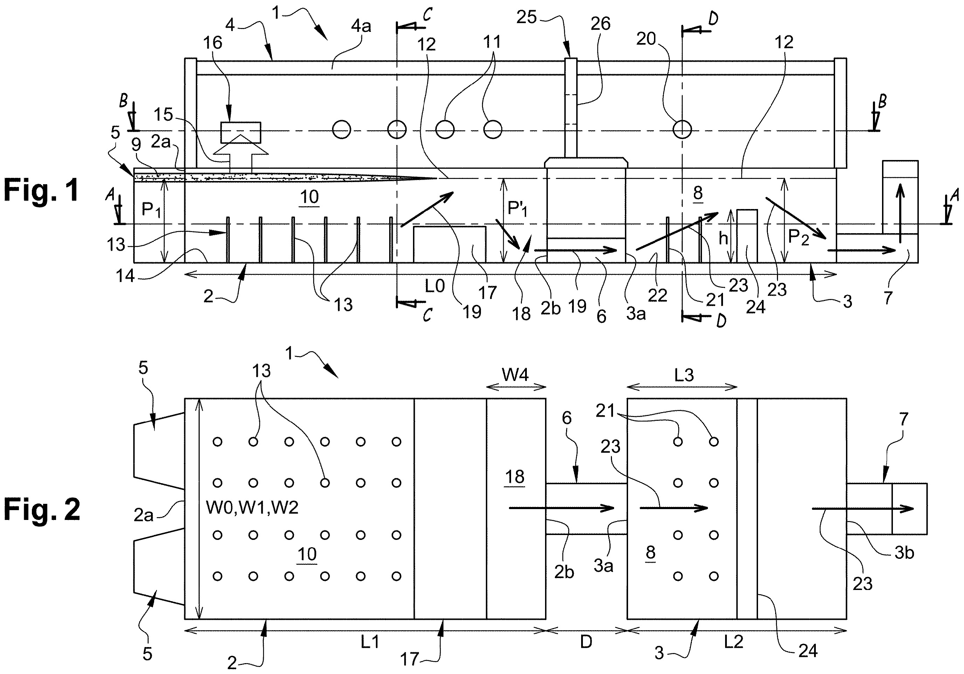

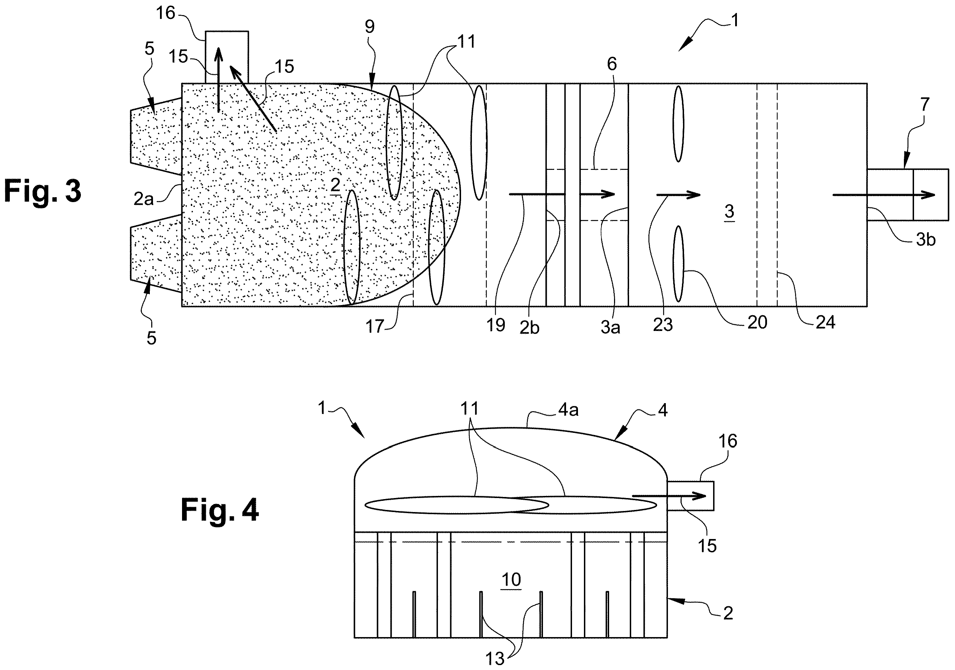

With reference to Figures 1-5 is shown a furnace 1 according to the invention. The furnace 1 is designed for the production of a refined molten glass 8 from a starting solid material 9. The furnace 1 comprises a first tank 2, configured for receiving and heating the starting solid material 9 in order to obtain a molten glass 10, and a second tank 3, configured for receiving the molten glass 10 obtained in the first tank 2 and for refining said molten glass 10 to obtain a refined molten glass 8. Both first and second tanks (2, 3) are covered by a superstructure 4 made of refractories, the ceiling of which is under the form of a crown 4a. On the example shown in the figures, the furnace 1 also comprises batch charging areas 5 for supplying the starting solid material 9, a first throat 6 for conveying the molten glass 10 from the first tank 2 to the second tank 3, and a second throat 7 at the exit of the second tank 3. On the example shown, the batching areas 5 are located at the back of the furnace 1. In embodiments not shown, the batching areas could be positioned on the sides of the furnace, in the rear portion of the furnace.

The various elements of the furnace 1 will now be described in details.

The first tank 2 is configured for receiving and heating the starting solid material 9 in order to obtain a molten glass 10. The first tank 2 comprises a first inlet opening 2a for the supply of the starting solid material 9. The starting solid material 9 may comprise all materials capable of producing glass when heated. For example, the starting solid material 9 may comprise raw materials such as quartz sand, soda, lime, dolomite, broken glass parts. In order to melt and homogenize the starting solid material 9, significant energy must be provided. In this view, the energy provided in the first tank 2 comes both from fuel combustion and from electric heating. The first tank 2 therefore comprises a series of burners 11 which are located above the surface 12 of the molten glass 10, under the crown 4a of the superstructure 4. The burners 11 therefore provide energy to the surface 12 of the molten glass 10. In order to evacuate the waste gas, such as CO₂ and H₂O, coming from the combustion of the fuel, the superstructure 4 is provided with a waste gas outlet 16. Arrow 15 on the Figures represents the trajectory of these gas through the gas outlet 16.

The first tank 2 also comprises one or several rows of electrodes 13 configured for providing electric heating to the molten glass 10. The electrodes 13 are located on the floor 14 of the first tank 2 and provide heating in the depth of the molten glass 10.

The first tank 2 further comprises a bench 17, located on the floor 14, in order to separate the part of the first tank 2 where the electrodes 13 are located from a transition area 18 located before the first throat 6. Electric heating produced by the electrodes 13 generates high convection currents with high velocities and high temperatures likely to cause corrosion of the refractories from which the walls of the first tank 2 are built. To counteract this phenomenon and optimize the lifetime of the furnace 1, the bench 17 is cooled and therefore forms a cooled weir. The bench 17 allows forming a downstream transition area 18 which is a quiet zone with respect to the zone containing the electrodes 13. The presence of the transition area 18 allows increasing the residence time of the molten glass 10 and improves the melting of the particles of the solid starting material 9. In addition, the bench 17 forces the particles to rise up to the surface 12 of the molten glass and to come in contact with the energy provided by the burners 11. The melting of the solid starting material 9 is therefore improved.

In the first tank 2, the direction of flow of the molten glass 10 is represented by arrows 19 on the Figures.

At the end of the transition area 18, the first tank 2 comprises a first outlet opening 2b for the outflow of the molten glass 10 towards the first throat 6. The first throat 6 is under the form of a channel linking the first outlet opening 2b of the first tank 2 to the second inlet opening 3a of the second tank 3. The temperature of the molten glass 10 in the first throat 6 ranges from about 1270°C to about 1390°C, more preferably from about 1300°C to about 1360°C, and most preferably is about 1310°C.

Regarding the overall trajectory of the molten glass in the furnace 1, the second tank 3 is separated from the first tank 2 by the first throat 6. The second tank 3 is the location where the molten glass 10 coming from the first tank 2 is refined to produce a refined molten glass 8. The second tank 3 is therefore designed to extend the residence time of the particles of refined molten glass 8 at a controlled temperature. Energy provided in the second tank 3 may be under the form of fuel combustion only or under the form of a combination of fuel combustion and electric heating. In the example shown in Figures 1-5, the energy supplied in the second tank 3 is under the form of a combination of fuel combustion and electric heating. In this view, the second tank 3 comprises burners 20 located above the surface 12 of the refined molten glass 8. The burners 20 provide heating to the surface 12 of the refined molten glass 8. In the example shown on Figures 1-5, two burners 20 are present in the second tank 3. The number and the location of the burners 20 in the second tank 3 may be modified depending on the desired crown 4a temperature profile. For example, additional burners 20 could be positioned on the side wall of the second tank 3. The second tank 3 also comprises a series of electrodes 21, located on the floor 22 of the second tank 3. Like for the first tank 2, the electrodes 21 supply heating in the depth of the refined molten glass 8. The insulation and the placement and/or use of the electrodes are optimized so that the energy input is minimal and hot spots, which may be responsible for defects through reboiling, are avoided. For example, in an alternative embodiment not shown, some of the electrodes present in the second tank 3 could be positioned on the side wall of the second tank 3, and extend horizontally therefrom towards the inside of the second tank 3.

In the second tank 3, the direction of flow of the refined molten glass 8 is represented by arrows 23. On the example shown in Figures 1-5, the second tank 3 comprises a weir wall 24 running substantially transverse to the direction of flow of the refined molten glass 8. As appears from Figure 1 with reference to arrows 23, the weir wall 24 causes the flow of refined molten glass 8 to rise up to overcome said weir wall 24. As a consequence, the particles of solid material 9 that may still be present in the refined molten glass 8 in the second tank 3 are forced to flow close to the surface 12 of the refined molten glass 8. When these particles reach said surface 12, they come in contact with very high temperatures generated by the burners 20. The minimum temperature of these particles is therefore significantly increased and the particles are efficiently melt. The weir wall 24 further contributes to increasing the residence time of the refined molten glass 8 in the second tank 3. Such a residence time increase allows a major part of the bubbles produced in the first tank 2 and still present in the refined molten glass 8 in the second tank 3 to rise to the surface 12 and to be released. The weir wall 24 further allows lowering temperature stratification in the second tank 3. As will appear more clearly from the mathematical modelling described in below Examples 1 and 2, the presence of a second tank 3 provided with a weir wall 24 allows increasing the quality of the refined molten glass 8 compared to a furnace having one single tank.

As appears from figures 1-5, each of the furnace 1, the first tank 2 and the second tank 3 shows a globally rectangular shape with a longitudinal direction and a transverse direction. The furnace 1 has therefore a global length L0 and a global width WO. The first tank 2 has a first length L1 and a first width W1, and the second tank 3 has a second length L2 and a second width W2. As appears from Figure 2, the length L2 is measured along the direction of flow of the refined molten glass 8 and extends from the second inlet opening 3a to a second outlet opening 3b of the second tank 3. The second tank 3 further shows a lenth L3 measured along the direction of flow of the refined molten glass 8 and extending from the second inlet opening 3a to the weir wall 24.

Preferably, the weir wall 24 is positioned in the second tank 3 so that 0.4xL2 < L3 < 0.9xL2. Such a position of the weir wall 24 allows increasing the residence time of the particles in an optimal way, thereby resulting in an improvement of the refining and of the quality of the refined molten glass 8.

In an embodiment not shown, the weir wall could be replaced by a bench, in particular a cooled bench.

Regarding the surperstructure 4, on the example shown, the second tank 3 is separated from the first tank 2 by a division wall 25. Alternatively, in embodiments not shown, no division wall is present between the first tank 2 and the second tank 3. In a further alternative embodiment not shown, two division walls are present between the first tank 2 and the second tank 3 instead of one single wall.

On the example shown on Figure 1, the division wall 25 is provided with a gas outlet 26 allowing exhausting the waste gas coming from the fuel combustion in the second tank 3 towards the first tank 2 for further evacuation through the waste gas outlet 16 of the first tank 2. In an alternative embodiment not shown, the gas outlet may be located in an breastwall of the second tank.

The second outlet opening 3b of the second tank 3 allows the outflow of the refined molten glass 8 towards the second throat 7. The second throat 7 is under the form of a channel linking the second outlet opening 3b of the second tank 3 to the forehearths (not shown). In the example shown on Figures 1-5, the longitudinal axis of the second throat 7 is aligned on the longitudinal axis of the second tank 3. The temperature of the refined molten glass 8 in the second throat 7 ranges from about 1300°C to about 1380°C, more preferably from about 1310°C to about 1340°C, and most preferably is about 1320°C.

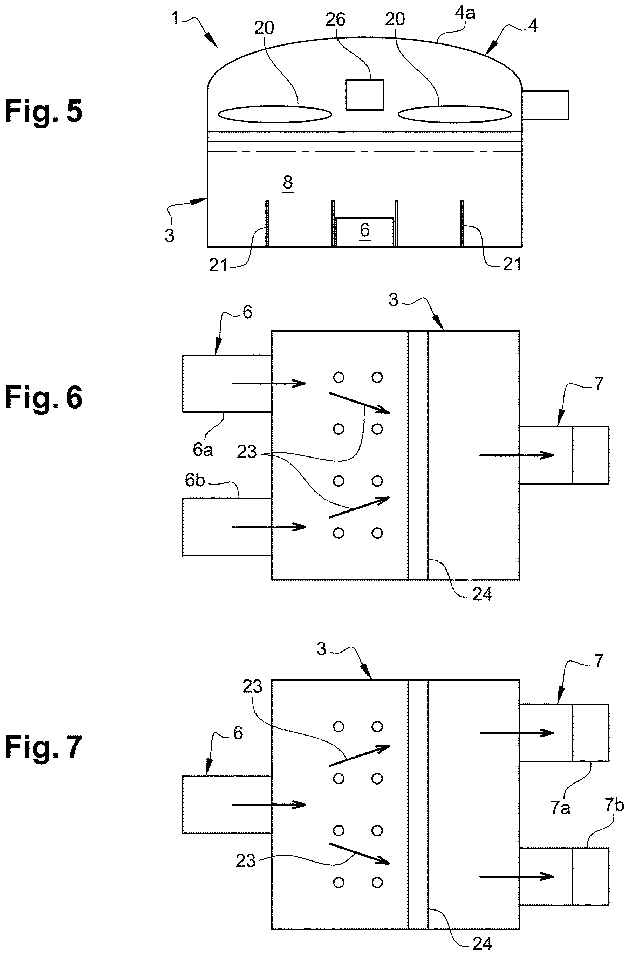

With reference to Figure 6, is shown an embodiment in which the link between the first tank (not shown) and the second tank 3 is under the form of two separated parallel throats (6a, 6b). Such an embodiment allows increasing the residence time of the refined molten glass in the second tank 3 as the direction of flow of the refined molten glass, as shown by arrows 23, is therefore made diagonal. In addition, providing throats having large widths is not always feasible with respect to what can be actually built with refractories. Nevertheless, depending on the furnace pull, it could be interesting to have throats showing large widths. The embodiment shown on Figure 6 allows building two throats (6a, 6b) with feasible convenient widths instead of one throat with a large width.

With reference to Figure 7, is shown an embodiment in which the link between the second tank 3 and the forehearths (not shown) is under the form of two separated throats (7a, 7b). Such an embodiment has the same advantages as those described above for the embodiment of Figure 6. In addition, the embodiment shown on Figure 7 allows conveying the refined molten glass exiting from the second tank 3 towards a plurality (such as two) of distributors (not shown) located upstream the forehearths.

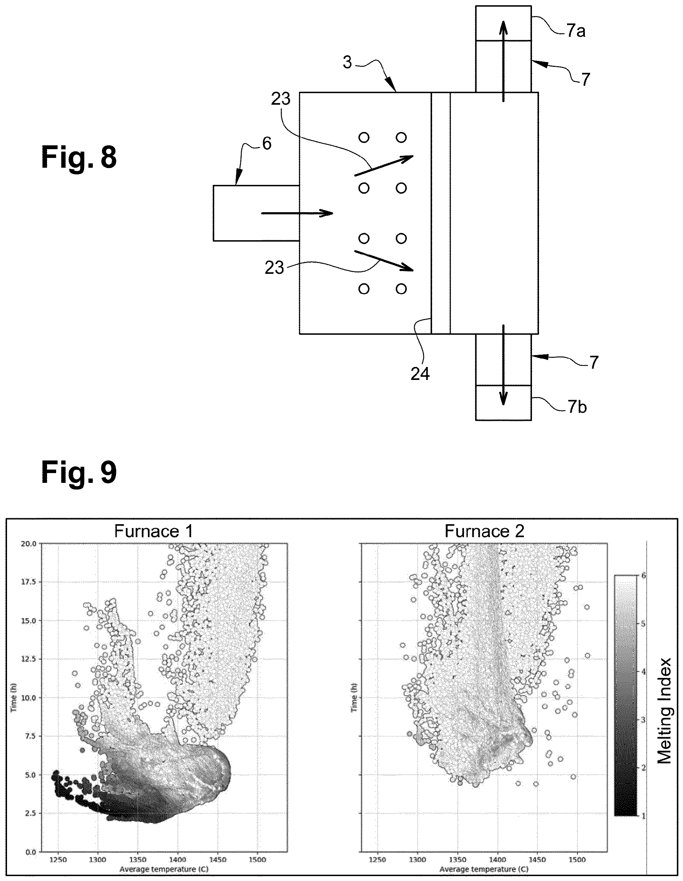

With reference to Figure 8, is shown an embodiment similar to that of Figure 7, where the throats (7a, 7b) are positioned so that the direction of flow of the refined molten glass in each throat (7a, 7b) is substantially perpendicular to the direction of flow of the refined molten glass in the second tank 3. In addition to the advantages already described with reference to Figures 6 and 7, such an embodiment allows reducing the furnace footprint in the longitudinal direction.

In Figures 1-2, the following references have the following meaning :
- W4 : width of the transition area 18,
- D : length of the first throat,
- P1 : height of the molten glass 10 bath in the first tank 2,
- P1' : height of the molten glass 10 bath in the transition area 18,
- P2 : height of the refined molten glass 8 bath in the second tank 3,
- h : height of the weir wall 24.

As examples, it is possible to have the following relations between the dimensions referred to above :
- L2 may range from 0.2WO to WO, for example from 1.5 m to 13 m,
- P2 may range from P1 to 1.9 P1, for example from 1.4 m to 2.6 m,
- W4 may range from 0.15L1 to 0.3L1,
- h may range from 0.2P2 to 0.7P2.

In addition, as an example, D may range from about 1.3 m to about 5.0 m.

The furnace 1 could work with a flat bottom (case P1 = P2) and a deep refiner for the transition area 18, i.e. where P1' would be equal or more than P1 and equal or less than 1.9P1 (i.e. P1≤P1'≤1.9P1).

### EXAMPLES

Mathematical modeling has been used in order to simulate the implementation and operation of the furnace of the invention. Mathematical modeling gives insight of the physical phenomena driving the glass and allows glass quality prediction based on models derived from laboratory measurements and validated on industrial furnaces.

In order to assess the quality of the refined molten glass, two types of quality indexes are used in the modeling :
- The melting index : this index is an integrated criteria taking into account bubbling/fining. In order to confer a melting index to a refined molten glass, the worst particles, defined as the 1% less refined particles, of the glass are evaluated. The higher the value of the melting index, the better the quality of the refined molten glass.
- The bubble index: this index is a criteria looking at the trajectory of the bubbles in the refined molten glass once sand particles are dissolved. The bubble index represents the fraction of bubbles that reach the forehearths and which are as a consequence likely to generate defects in the final products which will be made from the molten glass. The lower the value of the bubble index, the better the quality of the refined molten glass.

The mathematical modeling has been applied on a furnace as shown in Figure 1, in a case where the electric energy ratio with respect to the total energy provided was 60% (Example 1), and in a case where the electric energy ratio with respect to the total energy provided was 80% (Example 2).

### Example 1

The mathematic modeling was applied on a comparative furnace, not according to the invention, which would comprise a single tank corresponding to the first tank of Figure 1, with an electric energy ratio of 60% (herein after referred to as Furnace 1) and on the furnace of the invention of Figure 1 with an electric energy ratio of 60% (herein after referred to as Furnace 2).

### a) Melting index:

Figure 9 shows the heatmaps of the melting index for Furnace 1 and Furnace 2 as follows:
- Furnace 1 : heatmap of the melting index at the location of a throat located at the outlet of the single tank,
- Furnace 2 : heatmap of the melting index at the location of the second throat 7 (outlet of the second tank 3).

For each heatmap :
- Along the x axis is shown the time-averaged temperature (in °C),
- Along the y axis is shown the residence time of the particles (in hours),
- The intensity of the grey color corresponds to the melting index, the scale of which is shown on the right of the Figure.

The results of the heatmaps of Figure 9 for the 1% less refined particles of the molten glass are collected in the Table 1 below.

**Table 1 : Heatmap of the melting index for Furnace 1 and for Furnace 2 for the 1% less refined particles**

| **Furnace** | **Furnace 1 (comparative)** | **Furnace 2 (invention)** |
|---|---|---|
| Residence time (hours) | 2.18 | 5.21 |
| Time average temperature (°C) | 1310 | 1320 |
| Melting index | 1.87 | 6.0 |

These results show that, for the 1% less refined particles of the molten glass, from Furnace 1 to Furnace 2:
- The time-averaged temperature is similar,
- The residence time of the particles has increased from 2.18 hours to 5.21 hours, in other words by about 3 hours : this represents an increase of the residence time of about 136%,
- The lowest melting index has increased from 1.87 to 6.0

The furnace of the invention allows increasing significantly the residence time (increase of 136%) without having to redesign drastically the glass conditioning installation. Actually, in the present Example of a furnace of the invention according to Figure 1, the surface area of the second tank represents 22% of the surface area of the first tank. Taking into account the presence of the first throat between the first tank and the second tank, the total layout (comprising the first tank, the first throat and the second tank) represents an increase of surface area of 44% only, with respect to the surface area of the first tank taken alone.

As a comparison, if one wanted to increase the residence time of 136% in a conventional furnace having one single tank, the surface area of such a single tank would have to be multiplied by two. This would therefore represent an increase of the surface area of the layout of 100%.

Moreover, the results above show that, thanks to the furnace of the invention, it is possible to increase the ratio of electric heating up to 60% of the total energy provided and still obtain a refined molten glass of high quality thanks to the increase of the residence time, without having to increase significantly the temperature of the second throat. Indeed, as shown in Table 1 above, the time average temperature at the second throat is about 1320°C, which is similar to the time average temperature at the throat (about 1310°C) of a furnace having a single tank. Such a temperature of about 1320°C at the second throat of the furnace of the invention does not necessitate modifying the dimensions of the forehearths in existing glass conditioning installation in order to cool down the refined molten glass before it flows in the forming machines.

### b) Bubble index

Like for the melting index, the bubble index has been evaluated at the location of the throat of Furnace 1 and at the location of the second throat (outlet of the second tank) for Furnace 2.

The bubble index is based on the observation of where the bubbles will exit from the molten glass once the sand particles are dissolved : the bubbles may exit either from the free surface of the tanks or from the throat at the exit of the furnace. In order to obtain a refined molten glass of high quality, it is important that most of the bubbles exit from the free surface of the tanks and that only the lowest percentage as possible of bubbles exit from the throat. Indeed, as the particles that reach the throat are likely to generate defects in the products manufactured from the molten glass, it is important that as less particles as possible be dissolved in the throat, and therefore that as less bubbles as possible exit at the throat.

In order to evaluate the bubble index, one looks at:
- The ratio of bubbles that exit at the free surface of the tanks,
- The ratio of stuck particles (particles that do not dissolve during the melting process and that do not reach the throat at the end of the furnace),
- The ratio of bubbles that exit at the throat at the exit of the furnace.

In the present Example, the results for comparative Furnace 1 are as shown in the Table 2 below:

**Table 2 : Bubbles criteria results for Furnace 1**

| **Exit zone of the bubbles** | **Ratio** |
|---|---|
| Free surface of single tank | 88% |
| Stuck particles (not reaching the throat) | 3% |
| Throat **(Bubble index)** | **9%** |

The results for Furnace 2 of the invention are shown in the Table 3 below :

**Table 3 : Bubbles criteria results for Furnace 2**

| **Exit zone of the bubbles** | **Ratio** |
|---|---|
| Free surfaces of first and second tanks | 98% |
| Stuck particles (not reaching second throat) | <0.5% |
| Second throat **(Bubble index)** | **2%** |

It can be seen from the results above that in a furnace of the invention, i.e. having two tanks, a greater ratio (98%) of bubbles exit at the free surface of the tanks as compared to a furnace with only one tank (88%). In addition, in the furnace of the invention, only 2% of the bubbles exit at the second throat (exit of the furnace), whereas in a furnace having only one tank, up to 9% of the bubbles exit at the exit of the furnace (throat).

In conventional furnaces having a single tank, a bubble index of less than 7% is usually required to ensure correct glass quality. The results above show that this requirement is easily met with the furnace of the invention, which comprises two tanks.

### Example 2

The mathematic modeling was applied on a comparative furnace, not according to the invention, which would comprise a single tank corresponding to the first tank of Figure 1, with an electric energy ratio of 80% (herein after referred to as Furnace 3) and on the furnace of the invention of Figure 1 with an electric energy ratio of 80% (herein after referred to as Furnace 4).

### a) Melting index:

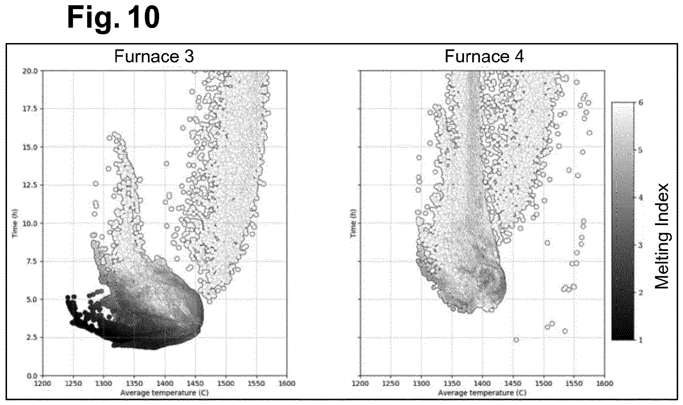

Figure 10 shows the heatmaps of the melting index for Furnace 3 and Furnace 4 as follows:
- Furnace 3 : heatmap of the melting index at the location of a throat located at the outlet of the single tank,
- Furnace 4 : heatmap of the melting index at the location of the second throat 7 (outlet of the second tank 3).

For each heatmap :
- Along the x axis is shown the time-averaged temperature (in °C),
- Along the y axis is shown the residence time of the particles (in hours),
- The intensity of the grey color corresponds to the melting index, the scale of which is shown on the right of the Figure.

The results of the heatmaps of Figure 10 for the 1% less refined particles of the molten glass are collected in the Table 4 below.

**Table 4 : Heatmap of the melting index for Furnace 3 and for Furnace 4 for the 1% less refined particles**

| **Furnace** | **Furnace 3 (comparative)** | **Furnace 4 (invention)** |
|---|---|---|
| Residence time (hours) | 1.97 | 4.75 |
| Time average temperature (°C) | 1310 | 1320 |
| Melting index | 1.42 | 5.2 |

These results show that, for the 1% less refined particles of the molten glass, from Furnace 3 to Furnace 4:
- The time-averaged temperature is similar,
- The residence time of the particles has increased from 1.97 hours to 4.75 hours, in other words by about 3 hours : this represents an increase of the residence time of about 141 %,
- The melting index has increased from 1.42 to 5.2.

Like in Example 1, these results show that the furnace of the invention allows increasing significantly the residence time (increase of 141%) without having to redesign drastically the glass conditioning installation.

Moreover, the results above show that, thanks to the furnace of the invention, it is possible to increase the ratio of electric heating up to 80% of the total energy provided and still obtain a refined molten glass of high quality thanks to the increase of the residence time, without having to increase significantly the temperature of the second throat.

### b) Bubble index

Like for the melting index, the bubble index has been evaluated at the location of the throat of Furnace 3 and at the location of the second throat (outlet of the second tank) for Furnace 4.

The bubble criteria have been observed as described in Example 1.

In the present Example 2, the results for comparative Furnace 3 are as shown in the Table 5 below :

**Table 5 : Bubbles criteria results for Furnace 3**

| **Exit zone of the bubbles** | **Ratio** |
|---|---|
| Free surface of single tank | 83% |
| Stuck particles (not reaching the throat) | <0.5% |
| Throat **(Bubble index)** | **17%** |

The results for Furnace 4 of the invention are shown in the Table 6 below :

**Table 6 : Bubbles criteria results for Furnace 4**

| **Exit zone of the bubbles** | **Ratio** |
|---|---|
| Free surfaces of first and second tanks | 96% |
| Stuck particles (not reaching second throat) | <0.5% |
| Second throat **(Bubble index)** | **4%** |

It can be seen from the results above that in a furnace of the invention, i.e. having two tanks, a greater ratio (96%) of bubbles exit at the free surface of the tanks as compared to a furnace with only one tank (83%). In addition, in the furnace of the invention, only 4% of the bubbles exit at the second throat (exit of the furnace), whereas in a furnace having only one tank, up to 17% of the bubbles exit at the exit of the furnace (throat).

## Claims

1. A hybrid furnace (1) for the production of a refined molten glass (8) from at least one solid starting material (9), said furnace (1) comprising :
- A first tank (2), which is a melting tank, configured to produce a molten glass (10) from said at least one solid material (9), said first tank (2) comprising a first inlet opening (2a) for the supply of said at least one starting material (9) and a first outlet opening (2b) for an outflow of said molten glass (10),
- A second tank (3), which is a refining tank, separated from said first tank (2), said second tank (3) being configured to refine the molten glass (10) coming from the first tank (2), said second tank (3) comprising a second inlet opening (3a) for the supply of said molten glass (10) and a second outlet opening (3b) for an outflow of the refined molten glass (8),
- A first throat (6) linking said first outlet opening (2b) to said second inlet opening (3a), configured for conveying the molten glass (10) from said first outlet opening (2b) to said second inlet opening (3a),
said furnace (1) being **characterized in that**
- said second tank (3) is provided with a separation wall (24) running substantially transverse to a direction of flow of the refined molten glass (8) in said second tank (3), said separation wall (24) being configured for forcing particles of the solid material (9) potentially present in the refined molten glass (8) to flow close to a surface (12) of said refined molten glass (8).

2. The furnace (1) of claim 1, wherein the separation wall is a bench.

3. The furnace (1) of claim 1, wherein the separation wall is a weir wall (24).

4. The furnace (1) of claim 3, wherein said second tank (3) showing a length L2 measured along the direction of flow of the refined molten glass (8) in said second tank (3) and extending from said second inlet opening (3a) to said second outlet opening (3b), and a length L3 measured along the direction of flow of the refined molten glass (8) in said second tank (3) and extending from said second inlet opening (3a) to said separation wall (24), then the separation wall (24) in said second tank (3) is positioned so that 0.4xL2 < L3 < 0.9xL2.

5. The furnace (1) of any one of claims 1 to 4, wherein the total energy needed to operate the furnace (1) being supplied under the form of a combination of combustion of fuel and of electric energy, electric energy represents at least 60%, preferably at least 80% of the total energy supplied.

6. The furnace (1) of any one of claims 1 to 5, wherein the energy supplied to the first tank (2) is under the form of a combination of combustion of fuel and of electric energy.

7. The furnace (1) of any one of claims 1 to 6, wherein the temperature of the molten glass (10) in the first throat (6) ranges from about 1270°C to about 1390°C, more preferably from about 1300°C to about 1360°C, and most preferably is about 1310°C.

8. The furnace (1) of any one of claims 1 to 7, wherein the energy supplied to the second tank (3) is under the form of combustion of fuel only.

9. The furnace (1) of any one of claims 1 to 7, wherein the energy supplied to the second tank (3) is under the form of a combination of combustion of fuel and of electric energy.

10. The furnace (1) of any one of claims 1 to 9, wherein the furnace (1) further comprises a second throat (7) located at the second outlet opening (3b).

11. The furnace (1) of claim 10, wherein the temperature of the refined molten glass (8) in the second throat (7) ranges from about 1300°C to about 1380°C, more preferably from about 1310°C to about 1340°C, and most preferably is about 1320°C.

12. Method for producing a refined molten glass (8) using a furnace (1) according to any one of claims 1 to 11.
